Europäisches Patentamt

European Patent Office

Office européen des brevets

(11) Publication number: **0 380 899**
**A1**

## (12) EUROPEAN PATENT APPLICATION

(21) Application number: **89600010.6**

(22) Date of filing: **04.05.89**

(51) Int. Cl.⁵: **F16H 3/72**

The title of the invention has been amended (Guidelines for Examination in the EPO, A-III, 7.3).

(30) Priority: **07.12.88 GR 88010082**

(43) Date of publication of application:
**08.08.90 Bulletin 90/32**

(84) Designated Contracting States:
**AT BE CH DE ES FR GB IT LI LU NL SE**

(71) Applicant: **Symbardis, Christos**
**19, Agisilaou Street AGH Dimitrios**
**GR-173 41 Athens(GR)**

(72) Inventor: **Symbardis, Christos**
**19, Agisilaou Street AGH Dimitrios**
**GR-173 41 Athens(GR)**

(54) Transmission providing a continuous range of gear ratios.

㉗ A gearbox with a continously changing transmission ratio, which basically employes a mechanism of the gears of the automobile's differential and a suitable shock absorber, to effect change of the transmission ratio. Various transmission ratios are obtainable with this gearbox.

FIG. 1

EP 0 380 899 A1

The invention relates to a gearbox which mainly makes use of the automobile wheels differential gear. The gearboxes used in the prior art are either automatic or employ a manually operated lever. We take certain transmission ratios from these as well.

The advantage of this invention is that it allows us to obtain various transmission ratios.

The characteristic of this invention is that it employs the mechanism of the automobile's differential gear as well as an either hydraulic or pneumatic shock absorber of the type used in automobile suspension systems.

The invention is presented in a simple manner by reference to the Figures(1)and(2).

The invented gearbox with a continuously changing transmission ratio comprises a metallic housing(1)of a square cross section, which is provided with a shaft with a bevel gear (2)mounted onto an opening of the housing, where the teeth of this gear engage to the teeth of the crown gear(3)of the differential gear. The crown gear(3) is provided with the differential's planet bevel gears(6,7), which rotate within ball bearings or roller bearings in order to reduce frictions. The teeth of two planet bevel gears(8,10)of the differential are engaged to the teeth of the planet bevel gears(6,7). The planet bevel gear(10)is mounted via a wedge(11)onto a shaft(9)which rotates and is mounted onto an opening of the metallic housing(1). The planet bevel gear(10)is mounted via a wedge(12)to the shaft of a crank(13), where one journal of the crank is mounted onto a bearing(15)and the other journal onto an opening of the metallic housing 1 and is also provided with a cavity via which flows lubricating oil for the lubrication of the connecting rod pin.

The head(17)of the connecting rod is connected with the connecting rod pin(13)and is supported onto the connecting rod bearing(16)via two bolts(18). The other end of the connecting rod(17)is connected by means of a pin(20)to the rod member of a piston(21)of a hydraulic shock absorber, whose cylidder is provided with flow openings which communicate by means of a tube(23). Two taps(24, 25)are provided at two points of the tube(23), by means of which the flow of the liquid may be controlled. During operation, when the bevel gearing(2)is supplied with motion thereby drives the planet bevel gears(8), (10)of the differential at different speeds depending on the degree of turning on of the taps(24, 25). The varying rotation is obtained by means of the planet bevel gear(8)of the differential.

mission ratio comprising a metallic housing (1) of square cross section, onto which a shaft with a bevel gear (2) is mounted and rotates with its teeth engaging the teeth of the crown gear 3 of the differential, where the said crown gear 3 is provided with the planet bevel gears (6,7) of the differential, which rotate within ball bearings or roller bearings (4,5) to reduce friction, where the planet bevel gears (8,10) of the differential engage to the teeth of the planet gears (6,7), where the planet bevel gear (8) of the differential is fixed via a wedge (11) to a shaft (9) rotating and mounted onto an opening of the said metallic housing (1), where the planet bevel gear (10) is mounted via a wedge (12) to the shaft of a crank (13), whose journals are sitted one upon a bearing (15) and the other onto an opening of the metallic housing (1), which is also provided with a cavity to allow flow of lubricating oil for lubrication of the connecting rod pin, where the head of the connecting rod (17) is connected to the said connecting rod pin of crank (13) and mounted via a connecting rod bearing (16) and two bolts (18), whereas the other end of said connecting rod (17) is connected via a pin (20) to the shaft of a piston ( 21) of an hydraulic shock absorber, the cylinder of which is provided with flow openings communicating via a tube (23), where two regulating taps (24,25) are provided at the points of said tube (23) to control the flow of liquid.

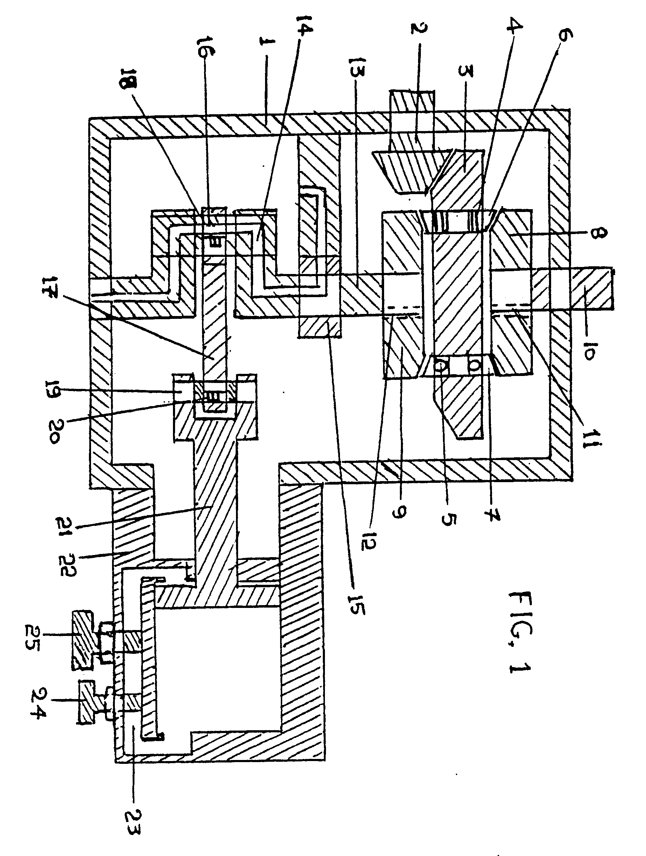

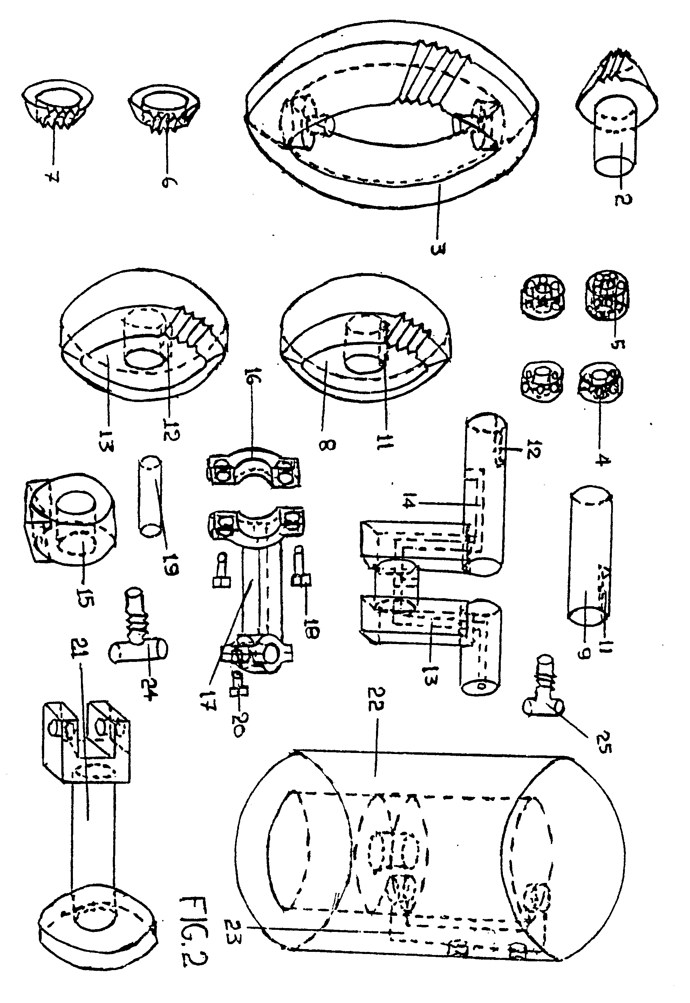

## Claims

1. Gearbox with a continuously changing trans-

FIG. 1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A- 846 185 (BONNEVAY)<br>* Whole document *<br>--- | 1 | F 16 H 3/72 |
| Y | US-A-2 666 342 (BELL)<br>* Column 2, line 44 - column 3, line 15; figures 1,2 *<br>--- | 1 | |
| A | PATENT ABSTRACTS OF JAPAN, vol. 7, no. 163 (M-229)[1308], 16th July 1983; & JP-A-58 68 513 (HONDA GIKEN KOGYO K.K.) 23-04-1983<br>* Whole document *<br>--- | 1 | |
| A | FR-A-1 093 191 (BEAK)<br>* Whole document *<br>----- | 1 | |

TECHNICAL FIELDS
SEARCHED (Int. Cl.5)

F 16 H
F 16 C
F 01 M

The present search report has been drawn up for all claims

| Place of search | Date of completion of the search | Examiner |
|---|---|---|
| THE HAGUE | 25-04-1990 | MENDE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)